(19) **Europäisches Patentamt**

**European Patent Office**

**Office européen des brevets**

(11) **EP 0 674 674 B1**

(12) **EUROPEAN PATENT SPECIFICATION**

(45) Date of publication and mention
of the grant of the patent:
**10.05.2000 Bulletin 2000/19**

(21) Application number: **94903658.6**

(22) Date of filing: **14.12.1993**

(51) Int. Cl.[7]: **C08G 18/00**, C08L 75/00,
C08J 9/00, C08K 3/04

(86) International application number:
**PCT/US93/12225**

(87) International publication number:
**WO 94/13721 (23.06.1994 Gazette 1994/14)**

(54) **PLASTIC STRUCTURES CONTAINING THERMAL GRADE CARBON BLACK**

THERMISCHEN RUSS ENTHALTENDE KUNSTSTOFFBAUTEILE

STRUCTURES DE MATIERE PLASTIQUE RENFERMANT DU NOIR DE CARBONE DE QUALITE THERMIQUE

(84) Designated Contracting States:
**AT BE CH DE DK ES FR GB GR IE IT LI LU MC NL PT SE**

(30) Priority: **15.12.1992 US 990961**

(43) Date of publication of application:
**04.10.1995 Bulletin 1995/40**

(73) Proprietor:
**THE DOW CHEMICAL COMPANY**
**Midland, Michigan 48674 (US)**

(72) Inventors:
• **BARTZ, Arnold, M.**
**Granville, OH 43023 (US)**
• **HITCHCOCK, Martin, K.**
**Newark, OH 43055 (US)**

(74) Representative:
**Casalonga, Axel et al**
**BUREAU D.A. CASALONGA - JOSSE**
**Morassistrasse 8**
**80469 München (DE)**

(56) References cited:
EP-A- 0 372 343          US-A- 3 546 143
US-A- 4 505 973          US-A- 4 795 763
US-A- 5 137 930

• DATABASE WPI Week 8903, Derwent
Publications Ltd., London, GB; AN 19721
'PREPARATION OF CARBON TYPE FOAM HEAT
INSULATING MATERIAL' & JP-A-63 295 651
(IBIDEN) 12 February 1988

**Description**

This invention relates to methods of insulating surfaces and enclosures with plastic structures containing a carbon black of certain configuration and type in a quantity sufficient to reduce the thermal conductivity of the structure.

Carbon black is known as an infrared radiation absorber and reflector, and has been commercially employed in insulative foam structures to reduce thermal conductivity. Extensive teachings of that use are seen in U.S. Patent No. 4,795,763 and WO 90/06339. They disclose several types of carbon black, and further disclose useful particle size ranges and loading (that is, weight) levels.

Problems with employing carbon black in insulative foam structures include processing problems and product quality problems.

One processing problem is the considerable difficulty of homogeneously dispersing or mixing the carbon black in a polymer melt or polymer gel of the melt with a blowing agent. Carbon black previously employed in insulative structures, furnace black, is commercially supplied in clusters of 2-90 particles due to thermal fusion during its manufacture. These clusters are practically impossible to break up during dispersion in the polymer melt or gel. Further, the clusters themselves are difficult to disperse in a polymer melt or gel due to electrostatic attraction between the clusters themselves. The dispersion problems may require expensive pre-compounding of the carbon black in the base polymer prior to manufacturing the foam structure. Pre-compounding is very expensive, and the carbon black still does not disperse sufficiently to achieve maximum reduction in thermal conductivity in the insulating foam structure. Further, the high loading levels of carbon black required to attain substantial reduction in thermal conductivity, typically 4-10 percent by weight of the foam structure, may further exacerbate the processing problems described above.

Another processing problem is the relatively large surface area and porosity of the previously-employed carbon black may attract and thus inhibit the activity of additives during manufacture of the foam structures. This inhibition may result in a reduced additive activity, higher additive loading requirements, or switching to less desirable additives.

Another processing problem of the previously-employed carbon black is its tendency to cling or adhere to surfaces, process equipment and otherwise. This surface cling results in housekeeping and cleanliness problems.

High loading levels of the previously-employed carbon black can also create skin quality problems in extruded foam structures.

It would be desirable to find a carbon black which readily disperses in a polymer melt. It would further be desirable to find a carbon black that can be dispersed without pre-compounding. It would further be desirable to find a carbon black providing greater reduction in thermal conductivity in a foam structure for a given loading.

According to the present invention, there is a method of insulating a surface or enclosure comprising applying to the surface or enclosure a polymeric foam structure comprising a foamed polymer material and carbon black incorporated therein. The carbon black is present in a quantity sufficient to reduce the thermal conductivity of the structure below that of a corresponding foam structure without carbon black. The carbon black is dispersed within the matrix of the foam structure in the form of discrete, individual particles substantially free of agglomeration or clumping. The discrete, non-agglomerated form of the carbon black allows it to be easily dispersed and processed during the manufacture of the foam structure. Preferably, the individual particles have a particle diameter of greater than 150 nanometers. The relatively large particle size allows the infrared radiation reflecting and scattering properties of carbon black to be more effectively utilized. A preferred carbon black is referred to commercially as thermal grade carbon black (thermal black). Thermal black provides greater reduction in thermal conductivity for a given loading than other types of carbon black previously employed in insulative foam structures. Additionally, thermal black is much easier to process and incorporate into the foam structure than the other types of carbon black previously employed.

Further according to the present invention, there is a method of insulating a surface or enclosure comprising applying to the surface or enclosure a foam structure comprising a foamed polymeric material and a quantity of carbon black sufficient to reduce the thermal conductivity of the foam structure below that of a corresponding foam structure without the carbon black. The carbon black has an average particle diameter of greater than 150 nanometers and may be of any type known in the art.

Further according to the present invention, there is a method wherein an insulating foam structure comprising a substantially non-cellular or un-foamed solid polymer material and the carbon black may be applied to a surface or enclosure.

Further according to the present invention, there is a process for making the above-described foam structure. A polymer material is heated to form a melt polymer material. The process comprises: heating a polymer material to form a melt polymer material; incorporating the carbon black described above into the melt polymer material to form a melt material mixture; incorporating a blowing agent into the melt material mixture at an elevated pressure to form a foamable gel; and extruding the foamable gel through a die to a zone of reduced pressure to form the foam structure.

Further according to the present invention, there are extruded, insulative plastic foam structures of a foamed polymeric material and carbon black or the type and configuration described above.

Suitable plastic materials may be selected from any of those which can be blown into foam. The plastic material may be thermoplastic or thermoset. Suitable plastics include polyolefins, polyvinylchloride, alkenyl aromatic polymers, cellulosic polymers, polycarbonates, polyetherimides, polyamides, polyesters, polyvinylidene chloride, polymethylmethacrylate, polyurethanes, polyisocyanurates, phenolics, copolymers and terpolymers of the foregoing, polymer blends, and rubber modified polymers. Suitable polyolefins include polyethylene and polypropylene. Suitable polyethylenes include those of high, medium, low, linear low, and ultra low density types.

The present foam structure preferably comprises an alkenyl aromatic polymer material. Suitable alkenyl aromatic polymer materials include alkenyl aromatic homopolymers and copolymers of alkenyl aromatic compounds and copolymerizable ethylenically unsaturated comonomers. The alkenyl aromatic polymer material may further include minor proportions of non-alkenyl aromatic polymers. The alkenyl aromatic polymer material may be comprised solely of one or more alkenyl aromatic homopolymers, one or more alkenyl aromatic copolymers, a blend of one or more of each of alkenyl aromatic homopolymers and copolymers, or blends of any of the foregoing with a non-alkenyl aromatic polymer. Regardless of composition, the alkenyl aromatic polymer material comprises greater than 50 and preferably greater than 70 weight percent alkenyl aromatic monomeric units. Most preferably, the alkenyl aromatic polymer material is comprised entirely of alkenyl aromatic monomeric units.

Suitable alkenyl aromatic polymers include those derived from alkenyl aromatic compounds such as styrene (vinyl benzene), alphamethylstyrene, ethylstyrene, vinyl toluene, chlorostyrene, and bromostyrene. A preferred alkenyl aromatic polymer is polystyrene. Minor amounts of monoethylenically, unsaturated compounds such as $C_{1-4}$ alkyl acids and esters there of ionomeric derivatives, and $C_{2-6}$ dienes may be copolymerized with alkenyl aromatic compounds. Examples of copolymerizable compounds include acrylic acid, methacrylic acid, ethacrylic acid, maleic acid, itaconic acid, acrylonitrile, maleic anhydride, methyl acrylate, ethyl acrylate, methyl methacrylate, vinyl acetate and butadiene. Preferred structures comprise substantially (that is, greater than 95 percent by weight) and most preferably entirely of polystyrene because polystyrene is economical, and is commonly employed in insulating plastic foam.

The type of carbon black incorporated in the present foam structure differs from that currently commercially employed because it disperses in the polymer matrix in a discrete particle form substantially free of agglomeration. The carbon black currently employed in insulative foam structures, furnace black, disperses in the polymer matrix in the form of clusters or agglomerations of individual carbon black particles. The type of carbon black useful in the present foam structure, thermal black, will disperse in the polymer matrix of the structure in a substantially discrete particle form.

A type of carbon black which will disperse in a discrete particle form is known in the art as thermal grade carbon black or thermal black. Other types of carbon black, including furnace black, acetylene black, channel black, and lamp black, do not provide the desired degree of dispersion in discrete particle form. Additional teachings distinguishing thermal black from other types of carbon black are seen in the following articles: John Wiley and Sons, Encyclopedia of Chemical Technology, Volume 4, Third Edition, Pages 631-666, 1978, Kirk-Othmer, New York; and Harry S. Katz and John V. Milewski, Handbook of Fillers and Reinforcements for Plastics, Pages 277-291, 1978, Van Nostrand Reinhold Company, New York.

Thermal black affords advantages over other types of carbon black in use in foam structures not appreciated in the prior art. Two important advantages are enhanced processability and enhanced insulating performance.

Thermal black is much more easily processed in making foam structures than other types of carbon black because it is much more easily dispersed in the polymer melt or the polymer gel of the melt and the blowing agent prior to extrusion into the foam structure. The discrete particle form, generally spherical shape, and relatively low average surface area of thermal black render it more easy to disperse in the polymer melt compared to other types of carbon black. Other types of carbon black, particularly furnace black currently commercially employed in insulative foam structures, are manufactured in thermally fused clusters or agglomerations of 2 to 90 particles. The clusters are very difficult to break up during dispersion of carbon black in a polymer melt or gel in a foam-forming process. Thus, foam structures formed with other types of carbon black may have a substantially clustered or agglomerated carbon black configuration.

Thermal black is typically made by high temperature decomposition of hydrocarbons in an oxygen-deprived environment and the absence of flames. The decomposition is a strongly endothermic reaction requiring a relatively large heat energy input. Additional teachings concerning the making of thermal black are seen in the publications cited above.

Another distinguishing feature of the present invention is the particle size of the carbon black. Though carbon black of any particle size may be used in the present foam structure, desirable particle size is preferably greater than 150 nanometers and more preferably 200 to 500 nanometers. These preferred particle size ranges further distinguish from the prior art for particle size ranges for carbon black in insulating foams because they are larger. All the particles of a given loading of carbon black need not be greater than 150 nanometers. Those of particle sizes greater than 150 nanometers are merely preferred for the reasons described below. Carbon black is typically sold in samples with an average particle size. The distribution of particle sizes will vary considerably around the average. Preferred particles will be that fraction of particles in the particle sample having a particle size diameter greater than 150 nanometers.

Insulating roam structures having larger particles have greater insulating capability or lower thermal conductivity for a given loading (weight) of carbon black than do insulating foam structures having the same loading with smaller particles. It follows that an insulating foam structure may utilize a smaller loading of larger particles to achieve a given thermal conductivity than with smaller particles. Thermal black has an advantage over other types of carbon blacks, including furnace black, in that it can be manufactured in relatively large particle sizes. Thermal black is commercially available in sizes greater than 150 nanometers. Larger particle sizes provide lower thermal conductivity to the foam structure than do small particles for any type of carbon black particle, including thermal black and furnace black. However, due to processing considerations it is preferred the carbon black be non-pelletized.

Though not bound by any particular theory, larger particles of carbon black are believed to lower the thermal conductivity of a foam structure more than smaller particles, because of enhanced infrared radiation scattering. For common infrared radiation wavelengths, 5-20 micrometers at ambient temperatures, and particle sizes of 100 to 500 nanometers, Rayleigh scattering dominates. The degree of scattering or scattering coefficient may be described by the following equation:

$$\sigma = 4\pi^2 \, \frac{NV^2}{\lambda^4} \, \left(\frac{\eta^2-\eta_0^2}{\eta^2+2\eta_0^2}\right)^2$$

$\pi$ pi ($\sim$3.14)
N = number of particles per unit volume
V = volume of a particle
$\lambda$ = wave length of radiation
$\eta$ = index of refraction of the particle
$\eta_0$ = index of refraction of the polymer matrix

Thus, infrared radiation scattering is a function of the square of the volume of individual particles. It follows that the larger the particles, the greater the extent of radiation scattering, and, thus, the lower the thermal conductivity in the foam structure.

Larger carbon black particles provide the additional advantage of lowering the conductive thermal conductivity of the foam structure. Carbon black, which has a higher thermal conductivity than most polymer materials, including polystyrene, acts as a bridge or domain for heat conduction through the solid polymer matrix of the foam structure. Larger particles, particularly those of a spherical shape, minimize geometric particles dimensions for heat conduction for a given loading of carbon black.

Thermal black has an additional advantage over carbon blacks previously used in insulating foam structures, including furnace black, in that a greater proportion of thermal black is deposited at the cell walls of foam cells upon foaming than with other carbon blacks. Though the mechanism of enhanced (greater) deposition at the cell wall is not well understood, such deposition results in lower solid conduction thermal conductivity and lower radiative thermal conductivity in the foam structure. The solid conduction thermal conductivity is believed to be lower because of lower thermal conductivity across the cell gas/carbon black interface than the carbon black/polymer interface. The radiative thermal conductivity is believed to be lower because of the higher index of refraction between the cell gas/carbon black interface than the carbon black/polymer interface.

A factor which practically limits the particle size of carbon black in a closed-cell foam structure is the thickness of cell walls. The particle size should be less than the cell wall thickness. The average particle size of carbon black preferably comprises one-half or less of the average cell wall thickness of the foam structure. Limiting the average particle size to one-half or less of the average cell wall thickness allows for normal statistical variation around the averages of both the particle size and cell wall thickness to ensure the physical integrity of a closed-cell foam structure. Average cell wall thickness is measured by optical methods. Average particle size is preferably an arithmetic mean based upon weight. For an open-cell foam structure, the particle size is not a critical factor regarding the physical integrity of the structure.

The dispersal of carbon black particles within the polymer matrix of the foam structure in a discrete particle form substantially free of agglomeration further lowers the thermal conductivity of the foam structure. Since carbon black has a higher thermal conductivity than most polymers, including alkenyl aromatic polymers, it is desirable to minimize geometric dimensions of particles or clusters of particles to avoid formation of heat conduction bridges or domains. With a discrete particle form, heat conduction bridges or domains of two or more particles clustered or clumped together are avoided, and thermal conduction through the carbon black is minimized. Furnace black commercially employed in insulating foam structures is commonly present in a foam structure in the form of clusters of 2-90 particles. In contrast, thermal black is present in the foam structure preferably in a substantially discrete particle form. Thus, thermal black provides a lower thermal conductivity in an insulative foam structure for a given loading than furnace black.

The carbon black is present in a quantity sufficient to reduce the thermal conductivity of the foam structure below that of a corresponding foam structure without the carbon black. The carbon black is preferably present at from 1.0 to 25 weight percent and more preferably at from 4 to 10 weight percent based on the weight of the polymer material in the foam structure. 4 to 10 weight percent carbon black is typically sufficient to dissipate the radiation component of heat in 3/8 inch (0.95 cm) to 6 inch (15 cm) thick foam panel structures in conventional residential and building insulating applications (-30°C to +50°C temperature service range).

The foam structure preferably has a low degree of flammability or a high degree of flame retardancy. A useful measure of flammability is the Limiting Oxygen Index (LOI), determined according to ASTM D2863-91. It is desirable to maximize LOI. The foam structure preferably has an LOI of 24 percent or more. A foam structure having thermal black has a greater LOI than a corresponding foam structure having furnace black for a given loading of carbon black.

In making the present foam structure, it is desirable to minimize pressure drop as possible through the process to enhance the ease of manufacture and lower manufacturing costs. A foam structure having thermal black can be made at a lower process pressure drop than a corresponding foam structure having furnace black for a given loading of carbon black.

An additional advantage of employing thermal black rather than furnace black is the color of the resulting foam structure. For a given loading of carbon black by weight, thermal black provides a foam structure with a lighter color than does furnace black. At the loading levels described above for insulating foam structures, thermal black provides a silver or gray color to the foam structure, while furnace black typically provides a much darker, typically dark black, foam structure. The lighter silver or gray color is easier to print on, making manufacturing easier and less expensive.

Thermoplastic polymer foam structures of the present invention are generally prepared by heating a polymer material to form a plasticized or melt polymer material, incorporating therein a blowing agent to form a foamable gel, and extruding the gel through a die to form the foam product. Prior to mixing with the blowing agent, the polymer material is heated to a temperature at or above its glass transition temperature or melting point. The blowing agent may be incorporated or mixed into the melt polymer material by any means known in the art such as with an extruder, mixer, or blender. The blowing agent is mixed with the melt polymer material at an elevated pressure sufficient to prevent substantial expansion of the melt polymer material and to generally disperse the blowing agent homogeneously therein. The carbon black may be dry blended with the polymer material or mixed with the polymer melt or the polymer gel by any of the means described above. The carbon black may also be pre-compounded with the polymer in the form of a carbon black/polymer concentrate, which may subsequently be let down by extrusion with additional amounts of polymer. Optionally, a nucleator may be blended in the polymer melt or dry blended with the polymer material prior to plasticizing or melting. The foamable gel is typically cooled to a lower temperature to optimize physical characteristics of the foam structure. The gel is then extruded through a die of desired shape to a zone of lower pressure to form the foam structure. The zone of lower pressure is at a pressure lower than that in which the foamable gel is maintained prior to extrusion through the die. The lower pressure may be superatmospheric or subatmospheric (vacuum), but is preferably at an atmospheric level.

Carbon black may be incorporated into bead foam in several ways. The carbon black may be admixed with a polymer resin melt during preparation of pre-expanded beads. Carbon black may also be incorporated into bead foam by coating pre-expanded beads prior to expansion and molding to form an article.

The selection of blowing agent is not critical to the present invention. Useful blowing agents include inorganic agents, organic blowing agents and chemical blowing agents. Suitable inorganic blowing agents include carbon dioxide, nitrogen, argon, water, air, and helium. Organic blowing agents include aliphatic hydrocarbons having 1-9 carbon atoms and fully and partially halogenated aliphatic hydrocarbons having 1-4 carbon atoms. Aliphatic hydrocarbons include methane, ethane, propane, n-butane, isobutane, n-pentane, isopentane, and neopentane. Fully and partially halogenated aliphatic hydrocarbons include fluorocarbons, chlorocarbons, and chlorofluorocarbons. Examples of fluorocarbons include methyl fluoride, perfluoromethane, ethyl fluoride, 1,1-difluoroethane, 1,1,1-trifluoroethane (HFC-143a), 1,1,1,2-tetrafluoroethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane. Partially halogenated chlorocarbons and chlorofluorocarbons for use in this invention include methyl chloride, methylene chloride, ethyl chloride, 1,1,1-trichloroethane, 1,1-dichloro-1-fluoroethane (HCFC-141b), 1-chloro-1,1-difluoroethane (HCFC-142b), 1,1-dichloro-2,2,2-trifluoroethane (HCFC-123) and 1-chloro-1,2,2,2-tetrafluoroethane (HCFC-124). Fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Chemical blowing agents include azodicarbonamide, azodiisobutyro-nitrile, benzenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, and trihydrazino triazine.

The amount of blowing agent incorporated into the polymer melt material to make a foam-forming polymer gel is from 0.2 to 5.0, preferably from 0.5 to 3.0, and most preferably from 1.0 to 2.50 moles per kilogram of polymer.

The foam component of the present foam structure preferably has a density of from 10 to 150 and most preferably from 10 to 70 kilograms per cubic meter. The foam preferably has an average cell size of from 0.05 to 5.0 and preferably from 0.1 to 1.5 millimeters according to ASTM D3576.

The foam component of the present foam structure may be closed cell or open cell depending upon the application. For most insulating applications, the present foam is desirably greater than 90 percent closed-cell according to ASTM D2856-A. A closed-cell structure substantially reduces convection effects, diffusion of insulating gas, and permeation of water vapor.

Various additives may be incorporated in the present foam structure such as inorganic fillers, pigments, antioxidants, acid scavengers, ultraviolet absorbers, flame retardants, processing aids, and extrusion aids.

In addition, a nucleating agent may be added in order to control the size of foam cells. Preferred nucleating agents include inorganic substances such as calcium carbonate, talc, clay, titanium oxide, silica, barium sulfate, diatomaceous earth, and mixtures of citric acid and sodium bicarbonate. The amount of nucleating agent employed preferably ranges from 0.01 to 5 parts by weight per hundred parts by weight of a polymer resin. A more preferred range is from 0.1 to 3 parts by weight.

According to the present invention, the present foam structure, in extruded or bead foam form, may be in the form of a laminated, a layered, or a coated foam structure with carbon black. Carbon black may be incorporated into a solid polymer layer such as a layer of plastic film or other solid polymeric material. The film or solid layer may be coextruded to form a foam structure having an alternating configuration of foam and film layers. Further, the carbon black may be coated or spread on the surface of the foam structure in the form of a film or adhesive coating.

According to the present invention, there is a solid insulating structure comprising a solid polymer material and the thermal black in the same proportions as in the foam structure described above. The solid insulating structure is made by heating a polymer material to form a polymer melt, incorporating and admixing the thermal black therein, and allowing the mixture of the melt and the thermal black to cool to a solid state. The solid insulating structure offers the insulating performance and processing advantages of thermal black over other types of carbon black previously employed in the art. The solid insulating structure may be used in any of the insulating applications described herein for the foam structure.

According to the present invention, the present foam structure may be used to insulate a surface or an enclosure by applying to the surface or enclosure an insulating panel fashioned from the present structure. Such panels are useful in insulating any surfaces or enclosures such as houses, roofing, buildings, refrigerators, freezers, and appliances.

The present foam structure may be formed into a plurality of discrete foamed particles for conventional loose-fill cushioning and packaging applications, or may be ground into scrap for use as blown insulation.

The following are examples of the present invention, and are not to be construed as limiting. Unless otherwise indicated, all percentages, parts, or proportions are by weight.

Closed-cell polystyrene foam structures of the present invention were made by an extrusion process of the present invention. The foam structures were formed with a generally uniform dispersion of thermal black to reduce the thermal conductivity of the structure.

The apparatus employed to make the foam structures comprised an extruder, a mixer, a cooler or coolers, and a slot die in series. The extruder was a 2-1/2 inch (6.3 cm) single-screw type. The die had a width of 3 inches (7.5 cm) and a die gap of 0.03-0.10 inch (0.76-2.5 mm).

The feedstock polymer employed was polystyrene of 195,000 weight average molecular weight according to by size exclusion chromatography. Additives dry blended with the polystyrene prior to feeding to the extruder were low density polyethylene (melt index 2.0-2.6, density 0.915-0.919 gram/cubic centimeter) at 0.3 pph (parts per hundred), talc at 0.25 pph, magnesium oxide at 0.04 pph, and hexabromocyclododecane at 2.67 pph based on the weight of polystyrene. The extruder operated at a rate of 200 pounds per hour (91 kilograms per hour).

The blowing agent was injected into the mixer downstream of the extruder. The blowing agent comprised 9.0 pph 1-chloro-1,1-difluoroethane (HCFC-142b), 2.5 pph ethyl chloride, and 1.4 pph carbon dioxide based on the weight of the polystyrene.

The thermal blacks employed were Arosperse 213 and 239 (J.M. Huber Corp.). Arosperse 213 and 239 had an average particle size (diameter) of 405 nm and 265 nm, respectively according to ASTM D3849-89.

K-factor was determined according to ASTM C518-85. R value equals L/k where L is the sample thickness and k is the thermal conductivity (k-factor). Open cell content is determined according to ASTM 2856-A. Average cell size is determined according to ASTM D3576.

As shown in Table 1, the present foam structures containing thermal black provided substantially higher thermal resistance and lower thermal conductivity than the control foam structure without thermal black.

## Table 1

### Closed Cell Foam Structures Containing Thermal Black

| Sample Number | Carbon Black (parts by weight) | Foaming Temperature (°C) | Die pressure psi (Kilopascals) | Foam Density pcf (kg/m³) | Cell Size (mm) | Particle Size (nm) | k-factor (BTU-in hr-ft²°F) W/(m.K) | R per (inch) cm | Percent Improvement over Control |
|---|---|---|---|---|---|---|---|---|---|
| 1 | control sample* (no carbon black) | 125 | 875 (6029) | 2.17 (34.72) | 0.47 | -- | (.224) 0.0323 | (4.46) 1.756 | Control Standard |
| 2 | 7 pph, Arosperse 213 (Thermal) | 125 | 725 (4995) | 2.09 (33.44) | 0.29 | 265 | (.193) 0.0278 | (5.19) 2.043 | 16.5 |
| 3 | 10 pph, Arosperse 213 (Thermal) | 125 | 710 (4892) | 2.11 (33.76) | 0.26 | 265 | (.190) 0.0274 | (5.27) 2.075 | 18.3 |
| 4 | 7 pph, Arosperse 239 (Thermal) | 122 | 875 (6029) | 2.20 (35.20) | 0.40 | 405 | (.191) 0.0275 | (5.23) 2.059 | 17.3 |
| 5 | 10 pph, Arosperse 239 (Thermal) | 122 | 813 (5602) | 2.13 (34.08) | 0.46 | 405 | (.196) 0.0282 | (5.11) 2.012 | 14.7 |

*Not an example of the present invention
pcf - pounds per cubic foot

Closed-cell polystyrene foam structures of the present invention were made, and were tested for flammability and process pressure drop was measured. The foam structures were compared to corresponding foam structures made with furnace black. The present foams made with thermal black showed greater flame retardancy and lower pressure drop than those made with furnace black. Both carbon blacks were compounded in the form of a concentrate with polystyrene and then further blended with additional polystyrene at the time of extrusion to achieve the desired carbon black loadings.

The apparatus employed to make the foam structures comprised an extruder, a mixer, a cooler or coolers, and a slot die in series. The extruder was a 2 1/2 inch (6.3 cm) single-screw type.

The feedstock polymer employed was polystyrene of 135,000 weight average molecular weight according to size exclusion chromotography. Additives dry blended with the polystyrene prior to feeding to the extruder were hexabromocyclododecane at 2.0 pph, linear low density polyethylene at 1.0 pph, polypropylene glycol of 1200 weight average molecular weight at 1.0 pph, calcium stearate at 0.05 pph, and magnesium oxide at 0.05 pph based on the weight of the polystyrene.

The blowing agent was injected into the mixer downstream of the extruder. The blowing agent comprised 4.5 pph carbon dioxide based on the weight of the polystyrene.

The thermal black employed was Arosperse 15 (J. M. Huber Corp.) having an average particle size of 320 nanometers and a surface area of 8 square meters per gram. The furnace black employed was Black Pearls 450 (Cabot Corp.) having an average particle size of 27 nanometers and a surface area of 80 square meters per gram.

The measure of flammability employed was the Limiting Oxygen Index (LOI) according to ASTM D2863-91. It is desirable to maximize the LOI.

Pressure drop was calculated by subtracting the die inlet pressure from the pressure at the mixer inlet. It is desirable to minimize the pressure drop to enhance the ease of manufacture.

The comparative results are seen below in Table 2:

Table 2

| Flammability and Pressure Drop | | | | |
| --- | --- | --- | --- | --- |
| Carbon Black Type | Loading (pph)[1] | LOI (percent) | Pressure Drop psi (Kilopascals) | Foam Density |
| Thermal | 7 | 24.0 | 1150 (7923) | 2.48 |
| Furnace* | 7 | 19.0-19.5 | 1350 (9301) | 2.93 |

* Not an example of this invention
[1] Parts per hundred carbon black based on the weight of the polystyrene

Surprisingly, the LOI exhibited by the present foam was much better than that of the comparative foam made with furnace black. The higher LOI suggests greater flame retardancy.

A significantly lower pressure drop was observed in making the present foam versus the comparative foam. The pressure drop was 200 psi (1378 kilopascals) lower for the foam made with thermal black.

While embodiments of the polymer structures, processes, and end uses of the present invention have been shown with regard to specific details, it will be appreciated that depending upon the manufacturing process and the manufacturer's desires, the present invention may be modified by various changes while still being fairly within the scope of the novel teachings and principles herein set forth.

## Claims

1.    A process for making an insulative polymeric foam structure, comprising:

       a. heating a polymeric material to form a melt material mixture,
       b. incorporating into the melt material mixture a quantity of carbon black sufficient to reduce the thermal conductivity below that of a corresponding foam structure without the carbon black,
       c. incorporating into the melt material mixture a blowing agent at an elevated pressure to form a foamable gel, and
       d. extruding the foamable gel through a die to a zone of reduced pressure to form the foam structure,
       the process being characterized in that
       the carbon black is thermal black and has a particle size of greater than 150 nanometers.

2.    The process of claim 1 wherein the carbon black is from 1.0 to 25 weight percent based upon the weight of the polymer material.

3. The process of claim 1 or 2 wherein the carbon black is from 4 to 10 weight percent based upon the weight of the polymer material.

4. The process of any of claims 1-3 wherein the particles have a particle size of 200 to 500 nanometers.

5. The process of any of claims 1-4 wherein the polymeric material is a thermoplastic polymer.

6. The process of any of claims 1-5 wherein the polymeric material is an alkenyl aromatic polymer.

7. The process of any of claims 1-4 wherein the polymeric material is a thermoset polymer.

8. The process of claim 7 wherein the polymeric material is a polyisocyanurate.

9. The process of claim 8 wherein the foam structure is closed-cell.

10. The process of claim 8 wherein the foam structure is fashioned into an insulating panel 0.95 cm to 15 cm thick.

11. The process of claims 1-10 wherein the foam structure has a Limiting Oxygen Index (LOI) of 24 percent or more.

**Patentansprüche**

1. Verfahren zur Herstellung einer isolierenden polymeren Schaumstruktur, umfassend:

   a. Erhitzen eines polymeren Materials zur Bildung einer geschmolzenen Materialmischung,
   b. Eingeben in die geschmolzene Materialmischung einer ausreichenden Rußmenge zum Reduzieren der Wärmeleitfähigkeit unter diejenige einer entsprechenden Schaumstruktur ohne den Ruß,
   c. Eingeben in die geschmolzene Materialmischung eines Blähmittels bei einem erhöhten Druck zur Bildung eines schäumbaren Gels,
   d. Extrudieren des schäumbaren Gels durch eine Düse in eine Zone von vermindertem Druck zur Bildung der Schaumstruktur,
   wobei das Verfahren dadurch gekennzeichnet ist, daß der Ruß thermischer Ruß ist und eine Teilchengröße von größer als 150 Nanometer hat.

2. Verfahren nach Anspruch 1, bei welchem der Ruß von 1,0 bis 25 Gew.-%, bezogen auf das Gewicht des polymeren Materials, ausmacht.

3. Verfahren nach Anspruch 1 oder 2, bei welchem der Ruß von 4 bis 10 Gew.-%, bezogen auf das Gewicht des polymeren Materials, ausmacht.

4. Verfahren nach einem der Ansprüche 1 - 3, bei welchem die Teilchen eine Teilchengröße von 200 bis 500 Nanometer haben.

5. Verfahren nach einem der Ansprüche 1 - 4, bei welchem das polymere Material ein thermoplastisches Polymeres ist.

6. Verfahren nach einem der Ansprüche 1 - 5, bei welchem das polymere Material ein alkenylaromatisches Polymeres ist.

7. Verfahren nach einem der Ansprüche 1 - 4, bei welchem das polymere Material ein hitzehärtbares Polymeres ist.

8. Verfahren nach einem der Ansprüche 7, bei welchem das polymere Material ein Polyisocyanurat ist.

9. Verfahren nach Anspruch 8, bei welchem die Schaumstruktur geschlossenzellig ist.

10. Verfahren nach Anspruch 8, bei welchem die Schaumstruktur zu einer isolierenden Platte von 0,95 bis 15 cm Dicke geformt ist.

11. Verfahren nach den Ansprüchen 1 - 10, bei welchem die Schaumstruktur einen Grenzsauerstoffindex (LOI = Limiting Oxygen Index) von 24 % oder mehr hat.

**Revendications**

1.  Procédé de fabrication d'une structure isolante en mousse de polymère comprenant :

    a) le chauffage d'une matière polymérique de manière à former un mélange de matière en fusion,
    b) l'incorporation dans le mélange de matière fondue d'une quantité de noir de carbone suffisante pour réduire la conductivité thermique à une valeur inférieure à celle d'une structure en mousse équivalente exempte de noir de carbone,
    c) l'incorporation, sous une pression élevée, d'un agent d'expansion dans le mélange de matière en fusion pour former un gel expansible, et
    d) extrusion du gel expansible à travers une filière dans une zone de pression réduite pour former la structure en mousse,
    le procédé étant caractérisé par le fait que le noir de carbone est du noir de carbone thermique et qu'il a une taille de particules supérieure à 150 nm.

2.  Procédé selon la revendication 1, dans lequel le noir de carbone est présent à raison de 1,0 à 25 % en poids, rapporté au poids de matière polymérique.

3.  Procédé selon la revendication 1 ou 2, dans lequel le noir de carbone est présent à raison de 4 à 10 % en poids, rapporté au poids de matière polymérique.

4.  Procédé selon l'une quelconque des revendications 1 à 3, dans lequel les particules ont des tailles comprises entre 200 et 500 nm.

5.  Procédé selon l'une quelconque des revendications 1 à 4, dans lequel la matière polymérique est un polymère thermoplastique

6.  Procédé selon l'une quelconque des revendications 1 à 5, dans lequel la matière polymérique est un polymère alcénylaromatique.

7.  Procédé selon l'une quelconque des revendications 1 à 4, dans lequel le matériau polymère est un polymère thermodurcissable.

8.  Procédé selon la revendication 7, dans lequel la matière polymérique est un polyisocyanurate.

9.  Procédé selon la revendication 8, dans lequel la structure de mousse est une structure à cellules fermées.

10. Procédé selon la revendication 8, dans lequel la structure en mousse est mise sous forme d'un panneau isolant ayant une épaisseur allant de 0,95 à 15 cm.

11. Procédé selon les revendications 1 à 10, dans lequel la structure en mousse a un indice limite d'oxygène (ILO) supérieur ou égal à 24 %.